# EUROPEAN PATENT APPLICATION

(11) **EP 4 129 932 A1**
(43) Date of publication of application: **08.02.2023**
(21) Application number: 21020400.4
(22) Date of filing: 05.08.2021
(51) Int. Cl.: C02F 1/78, C02F 3/12

(54) **APPARATUS AND METHOD FOR PURIFYING WATER**

(71) Applicant: Linde GmbH, 82049 Pullach (DE)
(72) Inventor: Gurney, Darren, 82049 Pullach (DE)
(74) Representative: Lu, Jing

(57) **Abstract**

Apparatus for purifying water comprising an ozone reaction chamber (100) and a membrane bio-reactor (200), wherein the membrane bio-reactor (200) is adapted to receive an oxygen containing gas which has previously passed through or been present in the ozone reaction chamber (100).

## Description

The present invention relates to an apparatus and a method for purifying water.

Micro-pollutants are a term used to describe a group of organic and to a certain degree inorganic compounds, such as persistent organic compounds, whose toxic bio accumulative and non-biodegradable properties are causing scientists and governments growing concern around the world. These compounds are, for example, present in many products that are consumed on a daily basis, such as medicines, phytosanitary products, insecticides, biocides, personal care products, hormones, PFAS, etc.

Conventional activated sludge wastewater treatment processes do not treat these compounds sufficiently, and they are present in the final effluent discharge in low, albeit inacceptable concentrations, often as low as in the region of nanograms or milligrams per liter (ppbn and ppm respectively).

Many of these compounds are thought to have potentially chronic effects on ecosystems, and can enter the human food chain, ultimately effecting human health. Current advanced oxidation processes (AOP) can only achieve an average of about 80% removal based on chemical oxygen demand (COD). A similar removal rate can be achieved using membrane bio-reactors with ultrafiltration membranes (UF-membranes).

It is known to purify water by treating the water in various pre-treating steps, followed by a filtering of pre-treated water in a membrane system. Such a method is known for example from EP 1553055 A1.

It is an object of the present invention to further improve the quality of purified water. This object is achieved according to the invention with an apparatus and a method according to the independent claims.

According to the invention, there is provided an apparatus for purifying water comprising an ozone reaction chamber and a membrane bio-reactor, wherein the membrane bio-reactor is adapted to receive an oxygen containing gas which, at least in part, has previously passed through or been provided in the ozone reaction chamber.

Advantageous embodiments are the subject matter of the dependent claims.

Advantageously, the apparatus further comprises an ozone destruct unit provided between the ozone reaction chamber and the membrane bio-reactor. Hereby, unreacted ozone is converted to oxygen and the excess oxygen present in the ozone reaction chamber, also referred to as ozone contactor, can be reused in the membrane bioreactor stage, reducing the energy requirement for aeration of the membrane bioreactor (MBR) unit.

According to a preferred embodiment, the apparatus further comprises an oxygen vessel and an ozone generator. This enables an efficient production and supply of ozone.

Expediently, the apparatus further comprises an ozone destruct off-gas receiver. This also serves to effectively capture for reuse ozone destruct gas and excess oxygen from the ozone contactor stage.

The apparatus according to the invention preferably comprises a gas booster adapted to increase the pressure of the oxygen containing gas received by membrane bio-reactor from the ozone reaction chamber via the ozone destruct off-gas receiver. Hereby, the energy efficiency of the membrane bio-reactor can be enhanced.

The method for purifying water according to the present invention comprises the following steps:
- supplying water to be treated to an ozone reaction chamber,
- supplying a first gas comprising ozone to the ozone reaction chamber, preferably ozone (03) at concentrations between 8 to 12 % w/w O₃ in oxygen (O₂)
- reacting of the ozone included in the first gas with the water to be treated in the ozone reaction chamber,
- supplying water treated in the ozone reaction chamber to a membrane bio-reactor,
- supplying a second gas, which at least in part is formed from the first gas and mainly comprises oxygen, to the membrane bio-reactor,
- subjecting the water treated in the ozone reaction chamber and supplied to the membrane bio-reactor to an aeration process within the membrane bio-reactor utilizing the second gas, and
- extracting water subjected to the aeration process from the membrane bio-reactor as a purified permeate.

Preferred embodiments of the invention will now be described with reference to the appended figures.
Fig. 1 shows a schematical view of a first preferred embodiment of the apparatus according to the present invention,
Fig. 2 shows a schematical side view of a second preferred embodiment of the apparatus according to the present invention, and
Fig. 3 shows a flow diagram illustrating a preferred embodiment of the method according to the present invention.

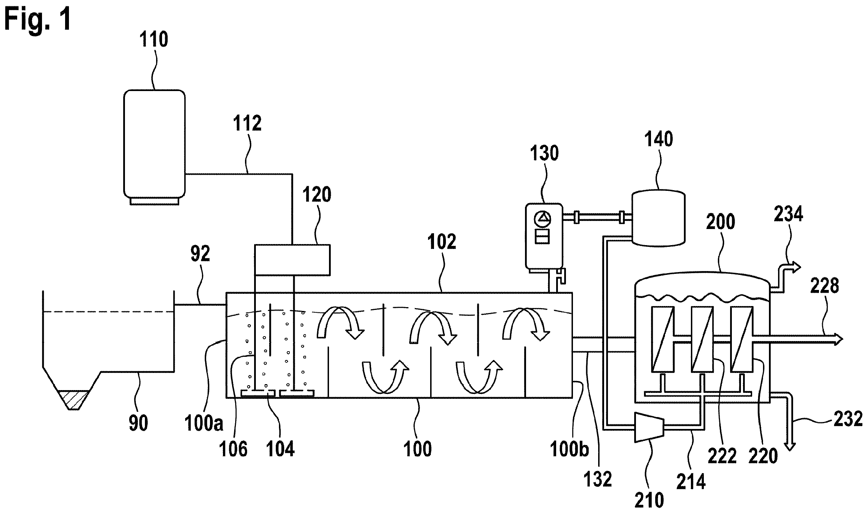

In Fig. 1, a preferred embodiment of the apparatus according to the invention includes an ozone reaction chamber 100 and a membrane bio-reactor 200. The apparatus further comprises an oxygen vessel 110, an ozone generator 120, an ozone destruct unit 130, an ozone destruct off-gas receiver 140 and a gas booster 210.

Water to be treated is supplied from a wastewater treatment plant 90 via a supply line 92. This water is typically referred to as clarified final treated effluent, as produced in a conventional water treatment process.

In the ozone reaction chamber, water to be treated is provided via line 92 to an inlet side 100a of the ozone reaction chamber.

Herein, water to be treated is supplied in such an amount that a headspace 102 comprising gaseous oxygen and ozone is provided within the ozone reaction chamber 100.

The ozone generator 120 is provided with oxygen via a supply line 112 from oxygen vessel 110. The ozone generator partially converts this oxygen into ozone. Typically, around 10% of the oxygen supplied is converted to ozone.

The oxygen/ozone mixture, typically comprising around 7 to 12 wt.-% ozone, also referred to as a first gas containing ozone in the claims, thus provided by means of ozone generator 120 is bubbled into the water within the ozone generator 100 using ceramic diffusers 104 placed in the initial contact zone at the inlet side 100a. The ceramic diffusers 104 are advantageously provided in a bottom region of the water column within ozone reaction chamber 100 in order to maximize mass transfer between ozone and the water phase.

For example, the ceramic diffusers 104 can be provided by means of correspondingly small openings at the bottom ends of supply lines 106 extending from the ozone generator though the headspace 102 into the water provided within the ozone reaction chamber 100.

The ozone supplied to the water within ozone reaction chamber 100 has the effect of breaking down micro pollutants to compounds that can be more easily further degraded by subsequent biological processes. The water is pumped from the inlet side 100a to an outlet side 100b of the ozone reaction chamber by means of a pump (not shown), whereby a reaction time of the water with the ozone can be set and/or varied. For example, by means of reducing the pump capacity, the reaction time can be extended. Typical reaction times of water and ozone within the ozone reaction chamber 100 are around 5 to 15 minutes, especially around 10 minutes. Typical operating pressures within ozone reaction chamber 100 are slightly above ambient pressure, for example in the region of 0.1 to 1.0 barg, especially or just above around 0.5 barg, corresponding to around or just above 1.5 bar absolute. Typical temperatures in the ozone reaction chamber 100 are around 15 to 25 C, wherein around 20% lower or higher temperatures are also conceivable.

Water treated in this way is pumped out of ozone generator or contactor 100 by means of a (not shown) transfer pump and supplied to membrane reactor 200 via supply line 132.

In the embodiment shown in Fig. 1, a plurality of membranes is immersed in and integral to the membrane bio-reactor 200. The bio-reaction takes place in an aeration zone 222 comprising a plurality of aeration vessels 224.

In these vessels 224, water entering the membrane bio-reactor 200 via line 132 interacts with oxygen supplied via line 214. The gas booster 210 is provided in this supply line 214. The gas booster typically raises the pressure of the oxygen containing gas received from around ambient pressure to around 2.0 barg.

This oxygen originates, at least in part, from the headspace 102 in the ozone reaction chamber 100.

The gaseous oxygen/ozone phase within the headspace 102 is continuously supplied to ozone destruct unit 130, in which remaining ozone is destroyed. The ozone destruct unit typically has an operating temperature of around or above 100 C. The ozone destruct unit 130 is, for example, provided as a catalytic thermal destruct unit.

The essentially ozone free gas, exiting the ozone destruct unit is supplied to ozone destruct off-gas receiver 140, from which supply line 214 extends into the aeration zone 220 of membrane bio-reactor 200. Excess gas within ozone destructs off-gas receiver 140, which is not required for the aeration process within membrane bio-reactor 200, can be discharged and passed into the ambient atmosphere from receiver 140.

Water within the membrane bio-reactor 200, is aerated within the aeration zone 222 and then removed or extracted from the membrane bio-reactor as purified effluent/permeate via supply line 228. At the same time, sludge generated during this process can be removed from membrane bio-reactor 200 by means of sludge removal line 232.

Be it noted that membrane bio-reactor 200 is shown in an essentially schematic way. Further components typically provided with such reactors, such as sand filtration units or further disinfection units are not shown.

Off-gas generated during the bio reaction within bio-reactor 200 can be discharged into the ambient atmosphere via off-gas outlet 234. This off-gas will typically comprise 80% oxygen as well as hydrogen, carbon dioxide and nitrogen.

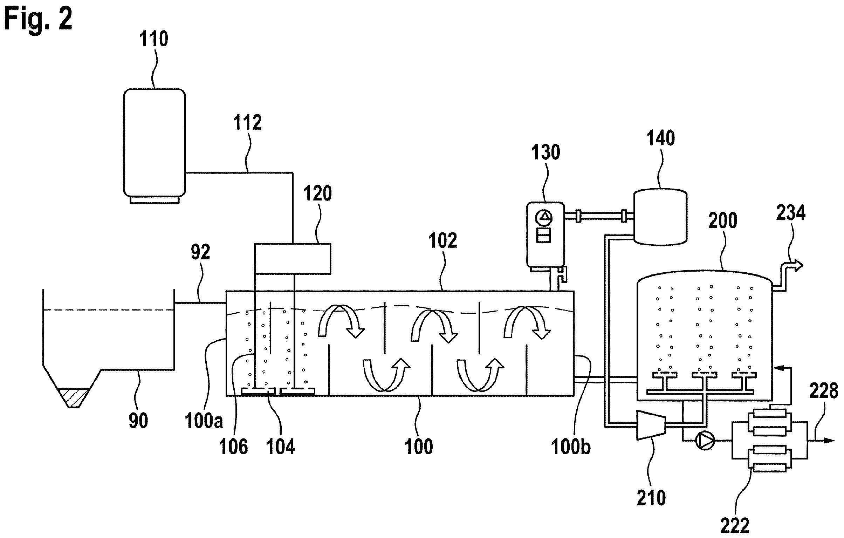

A second preferred embodiment of the apparatus according to the invention is shown in Fig. 2. In this embodiment, like components are designated with the same reference numerals. The essential difference to the embodiment of Fig. 1 is that the membranes are provided externally to the membrane bio-reactor.

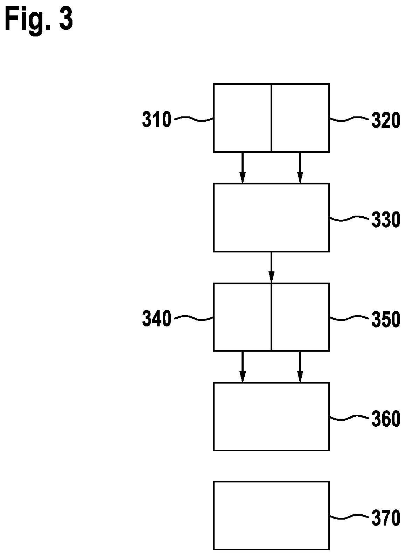

A preferred embodiment of the method of the invention will now be described with reference to Fig. 3.

In a step 310, water to be treated is supplied to an ozone reaction chamber.

In a step 320, a first gas comprising oxygen and ozone is supplied to the ozone reaction chamber step.

Step 310 and 320 are performed continuously and essentially at the same time.

In a subsequent step 330, the water to be treated is reacted with the ozone within the first gas.

In a step 340, water thus treated is supplied to a membrane bio-reactor.

In a step 350, a second gas, which is at least partly formed from the first gas, is supplied to the membrane bio-reactor.

Steps 340 and 350 are performed continuously and essentially at the same time.

The second gas essentially comprises oxygen as well as smaller amounts of carbon dioxide and nitrogen. The second gas is essentially derived from the first gas after the ozone reaction within the ozone reaction chamber and treatment of this gas in an ozone destruct unit.

In a subsequent step 360, a bio-reaction is performed in the membrane bio-reactor, comprising aerating a biomass, into which the treated water from the ozone reaction chamber is supplied, with said second gas essentially comprising oxygen.

In a subsequent step 370, treated and purified permeate/effluent is extracted from the membrane bio-reactor.

## Claims

1. Apparatus for purifying water comprising an ozone reaction chamber (100) and a membrane bio-reactor (200), wherein the membrane bio-reactor (200) is adapted to receive an oxygen containing gas which, at least in part, has previously passed through or been provided in the ozone reaction chamber (100).

2. Apparatus according to claim 1, further comprising an ozone destruct unit provided between the ozone reaction chamber (100) and the membrane bio-reactor (200).

3. Apparatus according to any one of the preceding claims, further comprising an oxygen vessel (110) and an ozone generator (120).

4. Apparatus according to any one of the preceding claims, further comprising an ozone destruct off-gas receiver (140).

5. Apparatus according to any one of the preceding claims, further comprising a gas booster adapted to increase the pressure of the oxygen containing gas received by membrane bio-reactor from the ozone reaction chamber (200).

6. Method for purifying water comprising the following steps:
- supplying (310) water to be treated to an ozone reaction chamber,
- supplying (320) a first gas comprising ozone to the ozone reaction chamber,
- reacting (330) of the ozone included in the first gas with the water to be treated,
- supplying (340) treated water to a membrane bio-reactor,
- supplying a second gas, which at least in part is formed from the first gas and comprises oxygen, to the membrane bio-reactor,
- subjecting the treated water to an aeration process within the membrane bio-reactor utilizing the second gas, and
- removing water subjected to the aeration process from the membrane bio-reactor as a purified permeate.
